# EUROPEAN PATENT APPLICATION

(11) **EP 3 892 105 A1**
(43) Date of publication of application: **13.10.2021**
(21) Application number: 20873338.6
(22) Date of filing: 10.08.2020
(51) Int. Cl.: A23F 5/02, A23F 5/04, A23N 12/08, A23N 12/10, A23N 12/12

(54) **COFFEE BEAN ROASTING APPARATUS**

(30) Priority: 24.02.2020 CN 202020202821 U
(71) Applicant: JIN, Wen, Zhejiang 315300 (CN); HU, Wei, Zhejiang 315300 (CN)
(72) Inventor: JIN, Wen, Zhejiang 315300 (CN); HU, Wei, Zhejiang 315300 (CN)
(74) Representative: HGF
(86) International application number: PCT/CN2020/108173
(87) International publication number: WO 2021/169183

(57) **Abstract**

Provided is a coffee bean roasting machine, including a roast chamber for accommodating coffee beans, a hot blast device for supplying hot or cool air to the roast chamber, and a collection chamber for collecting the outer skins of coffee beans. The collection chamber is in communication with the roast chamber; the bottom of the roast chamber is provided with a first bean outlet where a chamber door is set for open and close. Coffee beans can be easily taken out from the coffee bean roasting machine, without lifting up the whole roasting machine and tipping it over.

## Description

### TECHNICAL FIELD

The following relates to the technical field of household appliances, in particular to a coffee bean roasting machine.

### BACKGROUND

With the development of economy, high living quality is desired and therefore there are various small household appliances, such as coffee machines and tea machines, on the market.

Chinese Utility Model patent no. 201821126494.8 disclosed a coffee bean roasting machine, comprising a roasting body, a rotatable roasting mechanism, a heating device and fan blades, forming a hot blast roasting system. Based on this structure, coffee beans are roasted by the hot blast roasting system, and the outer skin of coffee bean can be peeled and collected in the collection chamber under the effects of wind during the roasting process.

However, such roasting machine is not convenient enough because the whole machine must be taken up to pour out the beans when the roasting process completed.

Therefore, it is desired to find a novel technology to avoid inconvenience in taking out coffee beans in the art.

### SUMMARY

In order to solve the above-mentioned problems, the present invention provides a coffee bean roasting machine, from which the coffee beans can be easily taken out, without tipping over the machine.

The present invention provides the following technical solution:
a coffee bean roasting machine, including a roast chamber for accommodating coffee beans, a hot blast device for supplying heat and air to the roast chamber and a collection chamber for collecting outer skins of coffee beans;
the collection chamber is in communication with the roast chamber; the bottom of the roast chamber is provided with a first bean outlet where a chamber door is set to open or close.

As a further improvement of the present invention, an area of the first bean outlet is smaller than a whole bottom area of the roast chamber;
a trigger switch is provided beneath the chamber door, and is electrically connected to the hot blast device; when the chamber door is open, the trigger switch is triggered to start up the hot blast device to blow; when the chamber door is closed, the trigger switch is not triggered, and the hot blast device stops blowing.

As a further improvement of the present invention, the area of the first bean outlet is half of the bottom area of the roast chamber.

As a further improvement of the present invention, the trigger switch is triggered when the chamber door is opened to a preset angle.

As a further improvement of the present invention, the preset angle is 30-60°.

As a further improvement of the present invention, the chamber door is hinged to the roast chamber through a hinged shaft; an elastic restoration member is provided on the hinged shaft, so that the chamber door can shut down the first bean outlet.

As a further improvement of the present utility model, the roasting chamber further includes a driving shaft for the chamber door, and the driving shaft is arranged parallel to the hinge shaft; a first gear is arranged on the hinge shaft; and a second gear that can be engaged with the first gear is arranged on the driving shaft, and one end of the driving shaft extends out.

As a further improvement of the present invention, a knob is provided at an end of the driving shaft.

As a further improvement of the present invention, the driving shaft is provided with a trigger protrusion which corresponds to a trigger switch.

As a further improvement of the present invention, the coffee bean roasting machine also includes a housing; the roast chamber and the hot blast device are both arranged inside the housing; the housing is provided with a second bean outlet, which is located below the first bean outlet and is in communication with the first bean outlet.

As a further improvement of the present invention, the roast chamber is provided with a first air outlet and a first air inlet which is in communication with the hot blast device and is arranged at a side of the roasting chamber.

As a further improvement of the present invention, an annular air flow channel is configured at the lower part of the roast chamber, and is in communication with the first air inlet; a plurality of second air inlets are configured corresponding to the annular air flow channel, and each of the second air inlets is configured obliquely and in communication with the annular air flow channel and is oblique.

As a further improvement of the present invention, the roast chamber includes a chamber bucket, an air inlet ring and a bottom plate;
the chamber bucket is buckled on the bottom plate where a dent is configured for buckling the bucket; the first bean outlet is provided in the bottom plate, and the upper end of the chamber bucket is open to form a first air outlet;
the air inlet ring is configured on the bottom plate and is enclosed by the chamber bucket, while a plurality of second air inlets are configured at the air inlet ring, thereby an annular air flow channel is formed between the air inlet ring and the chamber bucket; the first air inlet is configured at the chamber bucket.

As a further improvement of the present invention, the hot blast device includes a hot blast chamber, a heating element and a fan which are both arranged inside the hot blast chamber; the hot blast chamber is in communication with the first air inlet through an air duct.

As a further improvement of the present invention, the hot blast device further includes a hot blast control mainboard for controlling temperature and strength of the hot blast from the hot blast device, and the hot blast control mainboard is electrically connected to the heating element and the fan.

As a further improvement of the present invention, the hot blast device further includes a control pane which is arranged on the housing and electrically connected to the hot blast control mainboard.

As a further improvement of the present invention, the collection chamber is provided with a second air outlet in communication with an interior of the collection chamber; an inlet of the collection chamber is in communication with the first air outlet of the roasting chamber.

As a further improvement of the present invention, the collection chamber includes a lower shell and an upper shell which can join the lower shell;
the lower shell is provided with a concave cavity for accommodating bean skins; the second air outlet is arranged on the lower shell and/or the upper shell and is in communication with the concave cavity.

As a further improvement of the present invention, the upper shell is provided with a transparent window.

As a further improvement of the present invention, a net is configured inside the collection chamber, at a positon corresponding to the second air outlet, to prevent the outer skins of the coffee beans from spilling out.

As a further improvement of the present invention, the collection chamber is detachably installed above the roast chamber, and the lower shell is provided with a collar for insertion of the upper end of the roast chamber.

Compared with the prior art, the beneficial effects of the present invention are:
In the coffee bean roasting machine of the present invention, the first bean outlet is configured at the bottom of the roast chamber and is controlled to close off through the chamber door. When the coffee beans are roasted completely, the chamber door is open and at least most of the coffee beans can be discharged by their own gravities through the first bean outlet, without manually lifting up the whole roasting machine and take out the coffee beans.

### BRIEF DESCRIPTION OF DRAWINGS

The present invention will be further described in detail hereinafter with reference to the figures and embodiments:
Figure 1 is a perspective of the entire roasting machine of the present invention;
Figure 2 is a cross-sectional view of the entire roasting machine of the present invention;
Figure 3 is a cross-sectional view of the roast chamber and the hot blast device of the present invention;
Figure 4 is a perspective view of the roast chamber and the hot blast device of the present invention;
Figure 5 is an exploded view of the roast chamber of the present invention;
Figure 6 is an exploded view of the hot blast device of the present invention;
Figure 7 is an exploded view of the collection chamber of the present invention;
Figure 8 is an exploded view of the roasting machine of the present invention.

### Reference list:

- 1: - housing;
- 11: - left half of housing;
- 12: - right half of housing;
- 13: - bottom of housing;
- 14: - second bean outlet;
- 2: - roast chamber;
- 21: - first bean outlet;
- 22: - chamber door;
- 221: - hinge shaft;
- 222: - elastic restoration member;
- 223: - first gear;
- 23: - driving shaft;
- 231: - second gear;
- 232: - knob;
- 234: - trigger protrusion;
- 24: - trigger switch;
- 25: - first air outlet;
- 26: - first air inlet;
- 27: - annular air flow channel;
- 271: - second air inlet;
- 201: - chamber bucket;
- 202: - air inlet ring;
- 203: - bottom plate;
- 2031: - dent;
- 204: - holder for chamber door;
- 205: - outer cover of roast chamber;
- 3: - hot blast device;
- 31: - hot blast chamber;
- 311: - air duct;
- 32: - heating element;
- 33: - fan;
- 331: - fan blades;
- 332: - motor;
- 34: - hot blast control mainboard;
- 35: - control panel;
- 4: - collection chamber;
- 41: - second air outlet;
- 42: - lower shell of collection chamber;
- 421: - concave cavity;
- 422: - collar;
- 43: - upper shell of collection chamber;
- 431: - transparent window;
- 44: - net;
- 5: - measuring cup;
- 6: - coffee beans;
- 61: - outer skins of coffee beans

### DETAILED DESCRIPTION

The conception, concrete structures and their technical effects of the present invention will be described hereinafter with reference to the embodiments and figures, for the sake of fully understanding of the objectives, solutions and effects of the present invention. It should be noted that the embodiments and features therein in the present invention can be combined each other in a proper manner, where same reference numeric used throughout the figures indicate the same or similar part.

It should be noted that, unless otherwise specified, when a feature is called to be "fixed" or "connected" to another feature, the feature can be fixed or connected to the other feature directly or indirectly. In addition, the orientation wording "top", "bottom", "left", "right" and the like used in the present invention merely refer to the mutual position relationship of the relevant parts of the present invention in the figures.

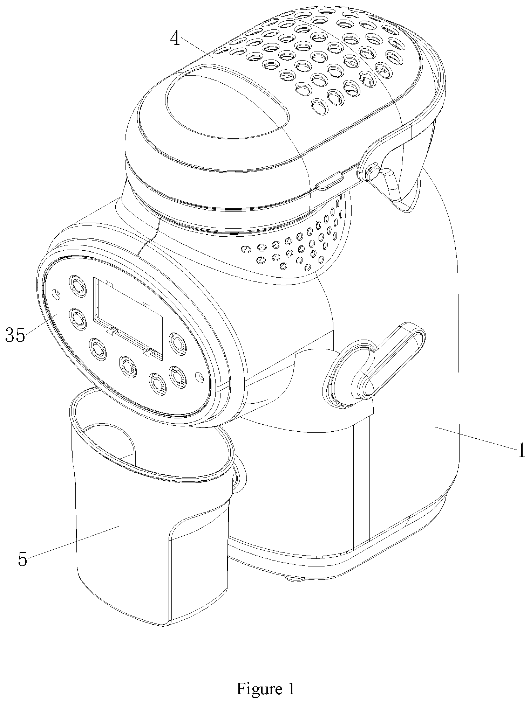

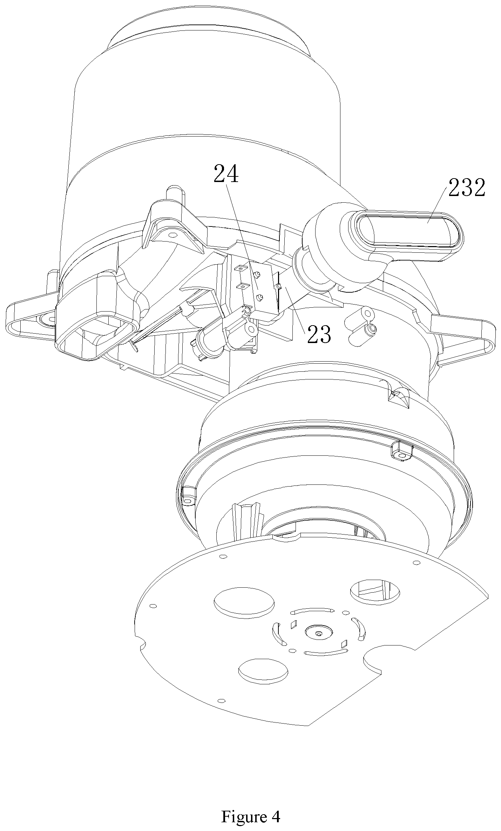

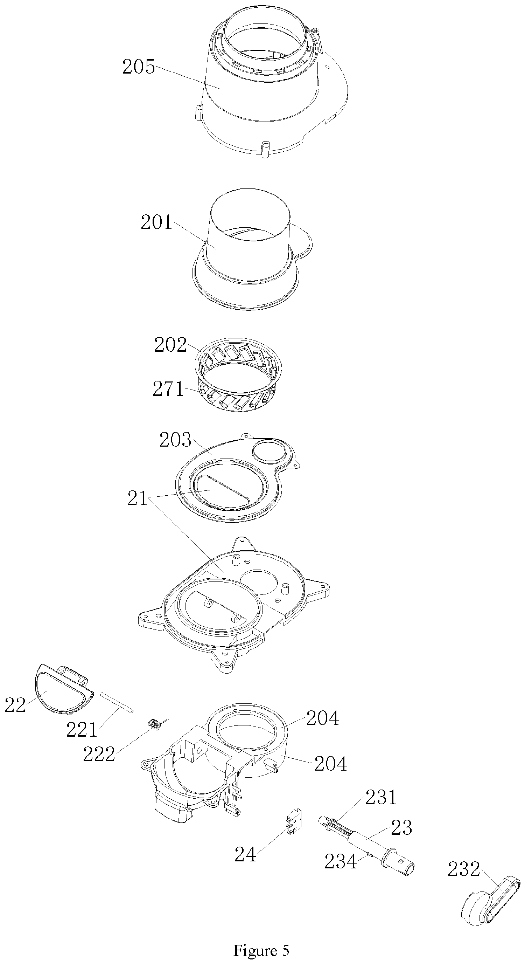

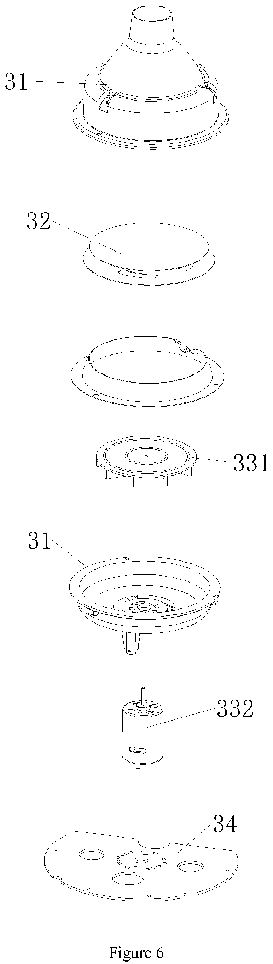

As shown in Figures 1 to 8, the present invention discloses a coffee bean roasting machine, including a housing 1, a roast chamber 2 for accommodating coffee beans 6, a hot blast device 3 for supplying hot or cool air to the roast chamber 2 to roast coffee beans, and a collection chamber 4 for collecting the outer skins 61 of coffee beans. Further the coffee bean roasting machine also includes a measuring cup 5.

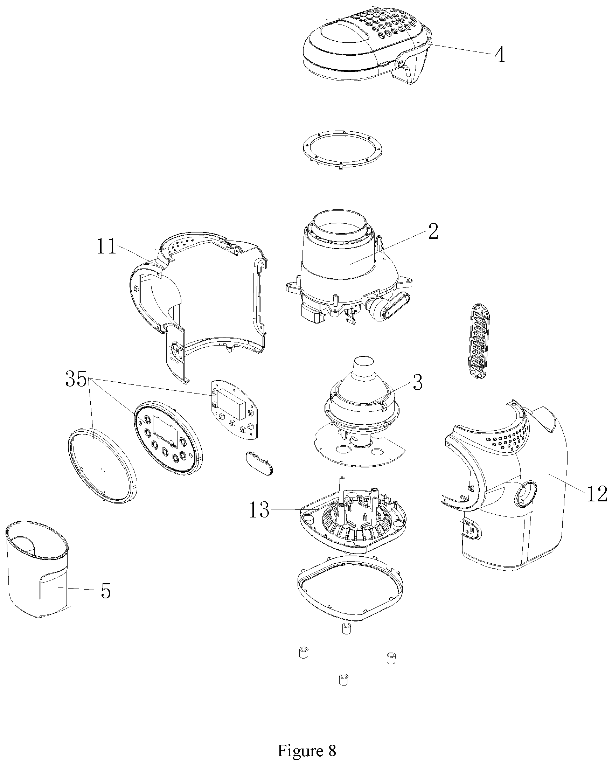

As shown in Figures 1 and 8, the housing 1 includes a left half 11 of the housing, a right half 12 of the housing and a bottom 13 of the housing. The hot blast device 3 is fixed on the bottom 13 of the housing, and the roast chamber 2 and the hot blast device 3 are arranged inside the housing 1 and surrounded by the left half 11 of housing and the right half 12 of the housing.

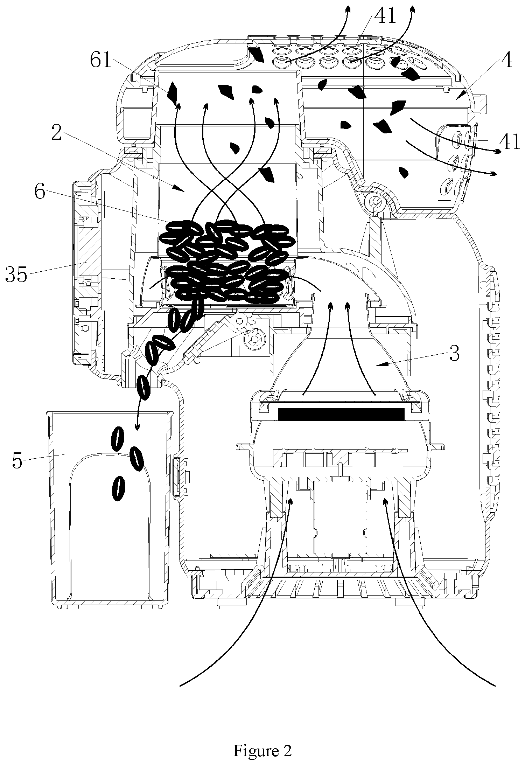

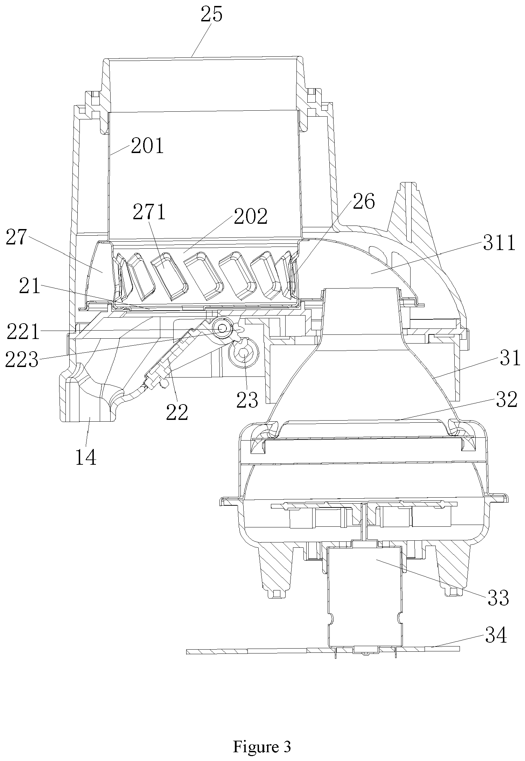

As shown in Figures 2 and 3, the collection chamber 4 is in communication with the roast chamber 2. The roast chamber 2 is filled with coffee beans 6 to be roasted. After roasting, the outer skins 61 of coffee beans are peeled from the coffee beans 6 and enter the collection chamber 4 under the action of the air flow.

In order to easily take out the roasted coffee beans 6, the bottom of the roast chamber 2 is provided with a first bean outlet 21 where a chamber door 22 is set to open or close. The housing 1 is also provided with a second bean outlet 14, which is located below the first bean outlet 21 and in communication with the first bean outlet 21.

Based on the above structure, the user can control the first bean outlet 21 to open or close by opening or shutting down the chamber door 22. When the coffee beans 6 have been roasted, the chamber door 22 located at the bottom of the roast chamber 2 is open, then at least most of the coffee beans 6 can be discharged through the first bean outlet 21 to the second bean outlet 14 due to the beans' gravities, and fall into a measuring cup 5, without lifting up the whole roast machine to take out the coffee beans 6. It is more convenient.

An area of the first bean outlet 21 is smaller than the whole bottom area of the roast chamber 2. In this embodiment, the area of the first bean outlet 21 is half of the bottom area of the roast chamber 2. In this circumstance, some coffee beans 6 may remain in the roast chamber 2 after the chamber door 22 is open. In order to facilitate the user to take out these coffee beans 6, this embodiment adopts a method to blow those out, as follows:
A trigger switch 24 is provided beneath the chamber door 22, and is electrically connected to the hot blast device 3. When the chamber door 22 is open, the trigger switch 24 is triggered to start up the hot blast device 3 to blow (the air delivered can be hot, or cool, i.e. the air is not heated). When the chamber door 22 is closed, the trigger switch 24 is not triggered, and the hot blast device 3 stops to blow.

Based on the above structure, the user can control the hot blast device 3 by the opening and closing of the chamber door 22. When the chamber door 22 is open, the hot blast device 3 works to blow the coffee beans out of the roast chamber 2. When the chamber door 22 is closed, the hot blast device 3 stops blowing. The specific structure as to how to trigger the trigger switch 24 by opening and shutting down the chamber door 22 will be described in detail hereinafter.

In order to further control the timing of blowing the coffee beans 6 out, the embodiment is configured such that the trigger switch 24 is triggered when the chamber door 22 swings at a preset angle. Specifically, the preset angle is 30-60°; preferably, the preset angle is 45°.

As shown in Figures 2 to 5, the chamber door 22 is hinged to the roast chamber 2 through a hinge shaft 221. An elastic restoration member 222 is provided on the hinge shaft 221, so that the chamber door 22 can be shut down normally under the elastic force of the elastic restoration member 222, to prevent the first bean outlet 21 from opening during the roasting process, thereby avoiding the spilling out of the coffee beans 6. The elastic restoration member 222 can be a torsion spring. When the roasting process is completed, the elastic restoration member 222 is forced to open the chamber door 22, and then the coffee beans 6 in the roast chamber 2 are discharged.

Further, in order to open the chamber door 22 easily, the roast chamber 2 includes a driving shaft 23 for the chamber door 22, the driving shaft 23 is arranged parallel to the hinge shaft 221, as shown in Figures 2 to 5. A first gear 223 is arranged on the hinge shaft 221, and a second gear 231 that can engage with the first gear 223 is arranged on the driving shaft 23, such that the driving shaft 23 is associated with the chamber door 22. One end of the driving shaft 23 extends out of the housing 1. In the present invention, the driving shaft 23 is installed on a holder 204 for the chamber door, the holder 204 forms a bean exit channel between the first bean outlet 21 and the second bean outlet 14. As the driving shaft 23 is associated with the chamber door 22, when the user rotates the driving shaft 23, the chamber door 22 will be driven to open so as to discharge the coffee beans 6 in the roast chamber 2.

Further, in order to facilitate the user rotating the driving shaft 23, as shown in Figures 2 to 5, a knob 232 is provided at an end of the driving shaft 23. By turning the knob 232, the driving shaft 23 can be rotated so as to open the chamber door 22.

The trigger switch 24 is triggered by opening the chamber door 22, to blow the coffee beans 6 out, this process is achieved by the following specific structures:
The driving shaft 23 is provided with a trigger protrusion 234 which corresponds to a trigger switch 24. When the chamber door 22 is open, the trigger protrusion 234 triggers the trigger switch 24 to start up the hot blast device 3, so that the remaining coffee beans 6 in the roast chamber 2 is blown out. When the chamber door 22 is closed, the trigger protrusion 234 is separated from the trigger switch 24, then the hot blast device 3 turn off and does not blow out anymore.

Specifically, as shown in Figures 2 to 5, the roast chamber 2 is provided with a first air outlet 25 and a first air inlet 26 which is in communication with the hot blast device 3 and is arranged at a side of the roast chamber 2. The chamber door 22 is arranged at the bottom of the roast chamber 2, and the first air outlet 25 can not only discharge hot blast, but also serves as an inlet for the coffee beans 6 to be roasted.

As shown in Figures 2 to 5, an annular air flow channel 27 is configured at the lower part of the roast chamber 2, and is in communication with the first air inlet 26. A plurality of second air inlets are configured corresponding to the annular air flow channel, and each of the second air inlets 271 is configured obliquely and is in communication with the annular air flow channel 27, such arrangement of the annular air flow channel 27 and the plurality of second air inlets 271 enables the coffee beans 6 in the roast chamber 2 to receive hot blast from all directions around, thereby being heated evenly and thoroughly.

Specifically, as shown in Figures 2 to 5, the roast chamber 2 includes a chamber bucket 201, an air inlet ring 202, a bottom plate 203 and an outer cover 205 for the roast chamber 2. The outer cover 205 encloses the chamber bucket 201, the air inlet ring 202 and the bottom plate 203, while the outer cover 205 is covered by the housing 1.

The chamber bucket 201 is buckled on the bottom plate 203 where a dent 2031 is configured for buckling the bucket 201. The first bean outlet 21 is provided in the bottom plate 203, and the upper end of the chamber bucket 201 is open to form a first air outlet 25.

The air inlet ring 202 is configured on the bottom plate 203 and is enclosed by the chamber bucket 201, the annular air flow channel 27 is therefore formed between the air inlet ring 202 and the inner side wall of the chamber bucket 201. A plurality of second air inlets are configured at the air inlet ring 202, and the first air inlet 26 is configured at the side wall of the chamber bucket 201.

Based on the above structure, during the roasting process, the hot blast enters the annular air flow channel 27 through the first air inlet 26, subsequently enters the chamber bucket 201 through the second air inlet 271, then exits from the first air outlet 25 and enters the collection chamber 4, such that the hot blast can carry the outer skins 61 of coffee beans peeled from the coffee beans 6 in the roast chamber 2 into the collection chamber 4 for collection.

Specifically, as shown in Figures 2, 3 and 6, the hot blast device 3 includes a hot blast chamber 31, a heating element 32 and a fan 33 which both are arranged inside the hot blast chamber 31. The hot blast chamber 31 is in communication with the first air inlet 26 through an air duct 311. The bottom of the hot blast chamber 31 is provided with an air inlet, correspondingly the bottom housing 13 is also provided with an air inlet. The fan 33 includes a motor 332 and fan blades 331. The heating element 32 may be a heating resistor or a positive temperature coefficient heater. The heating element 32 is located above the fan 33 and is installed by a fixed frame. The air flow generated by the fan 33 is heated into hot blast when passing through the heating element 32, and then enters the first air inlet 26 through the air duct 311, subsequently roasts the coffee beans in the roast chamber 2.

Preferably, the hot blast device 3 further includes a hot blast control mainboard 34 for controlling the temperature and strength of the hot blast from the hot blast device 3, and the hot blast control mainboard 34 is electrically connected to the heating element 32 and the fan 33. The hot blast control mainboard 34 is provided with a temperature control circuit and a temperature sensor.

Further, as shown in Figure 8, the hot blast device 3 further includes a control panel 35 which is arranged on the housing 1 and electrically connected to the hot blast control mainboard 34. The user can directly control the temperature and strength of the hot blast through the control panel 35. Specifically, the control panel 35 is provided with a control circuit board, which is provided with control buttons and a display for displaying hot blast data. More specifically, the control buttons include a switch button, a cool air button, a roast level button, a pre-roast button, a roast button, a timer button and so on to meet different needs of users.

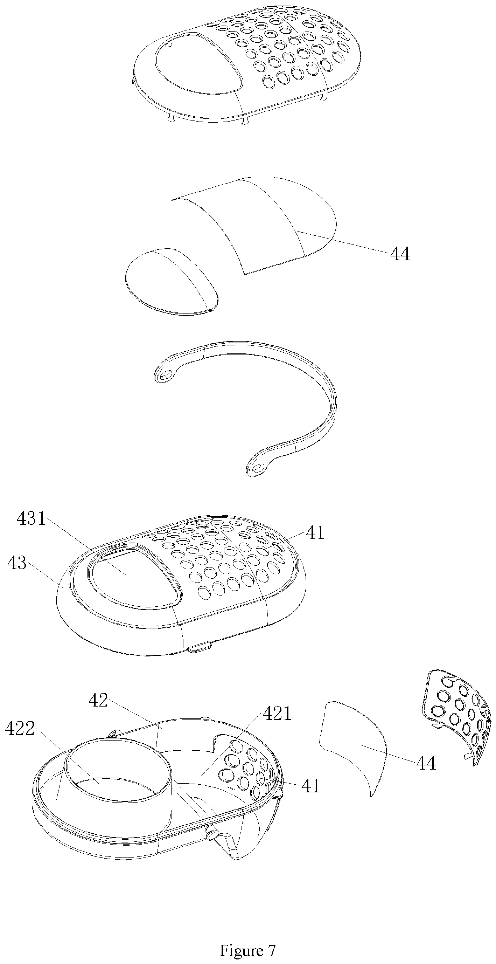

As shown in Figures 2 and 7, the collection chamber 4 is provided with a second air outlet 41 in communication with the interior of the collection chamber 4. An inlet of the collection chamber 4 is in communication with the first air outlet 25 of the roast chamber 2. The hot blast enters into the collection chamber 4 from the first air outlet 25 and then is discharged through the second air outlet 41.

Specifically, the collection chamber 4 includes a lower shell 42 and an upper shell 43 which can join the lower shell 42.

The lower shell 42 is provided with a concave cavity 421 for accommodating bean skins 61. The second air outlet 41 is arranged on the lower shell 42 and/or the upper shell 43, and is in communication with the concave cavity 421. The outer skins 61 of coffee beans blown by the hot blast fall into the concave cavity 421, and the hot blast is discharged from the second air outlet 41.

In addition, the upper shell 43 is provided with a transparent window 431, from which the situation of the outer skins 61 of coffee beans in the collection chamber 4 can be seen so as to determine whether the outer skins 61 of coffee beans are full and need to be discharged therefrom in time.

Preferably, a net 44 is configured inside the collection chamber 4, at a position corresponding to the second air outlet 41, to prevent the outer skins 61 of coffee beans from spilling out.

Preferably, as shown in Figure 2, the collection chamber 4 is detachably installed above the roast chamber 2, and the lower shell 42 is provided with a collar 422 for insertion of the upper end of the roast chamber 2, thereby the collection chamber 4 can be easily detached to pour the outer skins 61 of coffee beans out.

In addition, the collection chamber 4 is also provided with a handle for easy lifting of the collection chamber 4.

For other parts of the coffee bean roast machine of the present invention, please refer to the prior art, which will not be repeated here.

The embodiment described hereinbefore is merely preferred embodiment of the present invention and not for purposes of any restrictions or limitations on the invention. It will be apparent that any non-substantive, obvious alterations or improvement by the technician of this technical field according to the present invention may be incorporated into ambit of claims of the present invention.

## Claims

1. A coffee bean roasting machine, including a roast chamber for accommodating coffee beans, a hot blast device for supplying hot or cool air to the roast chamber and a collection chamber for collecting outer skins of coffee beans;
wherein the collection chamber is in communication with the roast chamber; the bottom of the roast chamber is provided with a first bean outlet where a chamber door is set to open or close.

2. The coffee bean roasting machine of claim 1, **characterized in that** an area of the first bean outlet is smaller than a bottom area of the roast chamber;
a trigger switch is provided beneath the chamber door, and is electrically connected to the hot blast device; when the chamber door is open, the trigger switch is triggered to start up the hot blast device to blow; when the chamber door is closed, the trigger switch is not triggered, and the hot blast device stops blowing.

3. The coffee bean roasting machine of claim 2, **characterized in that** the area of the first bean outlet is half of the bottom area of the roast chamber.

4. The coffee bean roasting machine of claim 2, **characterized in that** the trigger switch is triggered when the chamber door swings at a preset angle.

5. The coffee bean roasting machine of claim 4, **characterized in that** the preset angle is 30-60°.

6. The coffee bean roasting machine of claim 2, **characterized in that** the chamber door is hinged to the roast chamber through a hinged shaft; an elastic restoration member is provided on the hinged shaft, so that the chamber door can shut down the first bean outlet.

7. The coffee bean roasting machine of claim 6, **characterized in that** the roast chamber further includes a driving shaft for the chamber door, the driving shaft is arranged parallel to the hinge shaft; a first gear is arranged on the hinge shaft, and a second gear that can be engaged with the first gear is arranged on the driving shaft 23, and one end of the driving shaft extends out.

8. The coffee bean roasting machine of claim 7, **characterized in that** a knob is provided at an end of the driving shaft.

9. The coffee bean roasting machine of claim 7, **characterized in that** the driving shaft is provided with a trigger protrusion which corresponds to a trigger switch.

10. The coffee bean roasting machine of claim 1, further including a housing; the roast chamber and the hot blast device are both arranged inside the housing; the housing is provided with a second bean outlet, which is located below the first bean outlet and is in communication with the first bean outlet.

11. The coffee bean roasting machine of any of claims 1-10, **characterized in that** the roast chamber is provided with a first air outlet and a first air inlet which is in communication with the hot blast device and is arranged at a side of the roast chamber.

12. The coffee bean roasting machine of claim 11, **characterized in that** an annular air flow channel is configured at a lower part of the roast chamber, and is in communication with the first air inlet; a plurality of second air inlets are configured corresponding to the annular air flow channel, and each of the second air inlets is configured obliquely and is in communication with the annular air flow channel.

13. The coffee bean roasting machine of claim 12, **characterized in that** the roast chamber includes a chamber bucket, an air inlet ring and a bottom plate;
the chamber bucket is buckled on the bottom plate where a dent is configured for buckling the bucket; the first bean outlet is provided in the bottom plate, and the upper end of the chamber bucket is open to form a first air outlet;
the air inlet ring is configured on the bottom plate and is enclosed by the chamber bucket, while a plurality of second air inlet are configured at the air inlet ring, thereby an annular air flow channel is formed between the air inlet ring and the chamber bucket; the first air inlet is configured at the chamber bucket.

14. The coffee bean roasting machine of claim 11, **characterized in that** the hot blast device includes a hot blast chamber, a heating element and a fan which both are arranged inside the hot blast chamber; the hot blast chamber is in communication with the first air inlet through an air duct.

15. The coffee bean roasting machine of claim 14, **characterized in that** the hot blast device further includes a hot blast control mainboard for controlling the temperature and strength of the hot blast from the hot blast device, and the hot blast control mainboard is electrically connected to the heating element and the fan.

16. The coffee bean roasting machine of claim 15, **characterized in that** the hot blast device further includes a control panel which is arranged on the housing and electrically connected to the hot blast control mainboard.

17. The coffee bean roasting machine of claim 11, **characterized in that** the collection chamber is provided with a second air outlet in communication with an interior of the collection chamber; an inlet of the collection chamber is in communication with the first air outlet of the roast chamber.

18. The coffee bean roasting machine of claim 17, **characterized in that** the collection chamber includes a lower shell and an upper shell which can join the lower shell;
the lower shell is provided with a concave cavity for accommodating bean skins; the second air outlet is arranged on the lower shell and/or the upper shell and is in communication with the concave cavity.

19. The coffee bean roasting machine of claim 18, **characterized in that** the upper shell is provided with a transparent window.

20. The coffee bean roasting machine of claim 17, **characterized in that** a net is configured inside the collection chamber, at a position corresponding to the second air outlet, to prevent the outer skins of coffee beans from spilling out.

21. The coffee bean roasting machine of claim 18, **characterized in that** the collection chamber is detachably installed above the roast chamber and the lower shell is provided with a collar for insertion of the upper end of the roast chamber.
